# EUROPEAN PATENT SPECIFICATION

(11) **EP 2 585 621 B1**
(45) Date of publication and mention of the grant of the patent: **27.01.2021**
(21) Application number: 11797420.4
(22) Date of filing: 23.06.2011
(51) Int. Cl.: C21D 8/00, C21D 1/53, B29C 71/02, B29C 43/00, C21D 1/673, C21D 9/00, C21D 1/18, B29C 43/52

(54) **TAILORED PROPERTIES BY POST HOT FORMING PROCESSING**
MASSGESCHNEIDERTE EIGENSCHAFTEN DURCH NACHBEARBEITUNG NACH EINER HEISSFORMUNG
PROPRIÉTÉS PERSONNALISÉES PAR POST-TRAITEMENT DE FORMAGE À CHAUD

(30) Priority: 24.09.2010 US 386095 P; 03.09.2010 US 379801 P; 24.06.2010 US 358174 P
(43) Date of publication of application: 01.05.2013
(73) Proprietor: Magna International Inc., Aurora, ON L4G 7K1 (CA)
(72) Inventor: CHAREST, Pascal P., Caledon East, Ontario L7C 1P9 (CA); ADAM, Nicholas D., Trenton, Ontario K8V 5P4 (CA)
(74) Representative: Grünecker Patent- und Rechtsanwälte PartG mbB
(86) International application number: PCT/CA2011/000732
(87) International publication number: WO 2011/160209

(56) References cited:
- EP-A1- 0 407 275
- DE-A1- 19 743 802
- DE-B3-102010 027 179
- JP-A- S6 016 294
- US-A- 5 916 389
- US-A1- 2010 086 803
- US-A1- 2010 132 854
- US-B2- 6 840 765
- MERKLEIN M ET AL: "Herstellung von funktionsoptimierten Bauteilen im Presshärtprozess", STAHL UND EISEN, VERLAG STAHLEISEN, DUSSELDORF, DE, vol. 130, no. 6, 15 June 2010 (2010-06-15) , pages 51-57, XP001558170, ISSN: 0340-4803
- HILDITCH T ET AL: "Post-forming heat treatment of dual phase steel components for automotive applications using a fluid bed furnace", MATERIALS FORUM. A JOURNAL OF THE SCIENCE AND TECHNOLOGY OF ENGINEERING MATERIALS, INSTITUTE OF METALS AND MATERIALS AUSTRALASIA, SYNDEY, AU, vol. 31, 1 January 2007 (2007-01-01), pages 24-30, XP009502181, ISSN: 0883-2900, DOI: 10.1.1.553.3839
- H. KARBASIAN. ET AL.: 'A review on hot stamping' JOURNAL OF MATERIALS PROCESSING TECHNOLOGY vol. 210, 2010, pages 2103 - 2118, XP027378020

## Description

### FIELD OF THE INVENTION

The instant invention relates generally to shaped metallic products having tailored properties, and more particularly to a method of producing regions of reduced hardness and reduced strength in shaped products via post hot forming processing.

### BACKGROUND OF THE INVENTION

In the field of vehicle construction, more and more vehicle parts made of high-strength and ultra-high-strength steel are being employed in order to satisfy criteria for lightweight construction. This applies to car body construction where, in order to meet weight goals and safety requirements, for instance structural and/or safety elements such as door intrusion beams, A and B columns, bumpers, side rails and cross rails are increasingly being produced from UHSS (Ultra High Strength Steel), thermo-shaped and press-hardened steel having tensile strengths greater than 1000 MPa.

In different applications of motor vehicle engineering, shaped parts are to have high strength in certain regions while in other regions they are to have higher ductility relative thereto. "Tailoring" the properties of shaped parts in this way facilitates subsequent forming operations, such as for instance trimming or perforating the part, and results in regions that can convert crash energy into deformation by crumpling.

It is known to treat a part using heat treatments such that local regions have higher strength or higher ductility. Lundstrom discloses one such approach in United States Patent 5,916,389, wherein a sheet of hardenable steel is heated to an austenitization temperature and then pressed between cooled die halves in order to form a shaped part having a desired profile. Sections of the die halves adjacent to portions of the part that are to have higher ductility in the finished product are adapted to prevent rapid cooling, such that hardening does not occur within these portions to the same extent that occurs within other portions of the finished product. Unfortunately, the die halves must be specially made for each part, which is both laborious and costly. In addition, special effort is required in order to minimize the extent of formation of transition regions between the different portions, since typically these transition regions exhibit properties that are less well defined than the properties of the rest of the finished product.

In another approach a shaped product having substantially uniform hardness is produced using conventional hot forming and press hardening techniques, followed by separate additional heat treatment of the product to form regions of lower tensile strength therein. For instance, in United States Patent Application Publication 2010/0086803, Patberg discloses a method of forming mild zones along a bend edge of a hot formed and press hardened component. In particular, a laser beam is used to heat a narrow region of the component along the bend edge. Additionally, Patberg suggests that the heat that is produced by welding may result in the formation of mild zones adjacent to a weld joint. Unfortunately, the use of highly specialized laser equipment adds to the cost and complexity of the component. In addition, this approach is not well suited either to batch processing or to applications requiring the formation of substantial regions having reduced tensile strength within the component. In Merklein M et al: "Herstellung von funktionsoptimierten Bauteilen im Presshartprozess", Stahl und Eisen, Verlag Stahleisen, Dusseldorf, DE, vol. 130, no. 6, 15 June 2010, pages 51-57, ISSN: 0340-4803, there is disclosed a situation, wherein a working part may be produced by heating treatment, which is then followed by cooling treatment, such as that a martensitic structure is formed. Thereafter, heating is applied that a working part having two portions generated, wherein a lower portion has been further heated and the upper portion not heated.
From Hilditch T et al: "Post-forming heat treatment of dual phase steel components for automotive applications using a fluid bed furnace", Materials Forum. A Journal of the Science Institute of Metals and Materials Australasia, Syndey, AU, vol. 31, 1 January 2007, pages 24-30, ISSN: 0883-2900, there is known use of a fluid bed for heating.
US 6,840,765 B2 discloses a situation in which a part is partially immersed into a fluidized bed. On top of the fluidised bed there is an atmosphere layer as to which temperature may be controlled.

It would be advantageous to provide a method that overcomes at least some of the above-mentioned limitations of the prior art.

### SUMMARY OF EMBODIMENTS OF THE INVENTION

The present invention provides a method for forming a shaped product from an initial blank. The method has the features defined in claim 1. Further preferred embodiments are defined in the dependent claims. A method of forming a shaped product from an initial blank is provided, in which the initial blank is subjected firstly to a hot forming and press hardening operation so as to form the shaped product with substantially a uniform first tensile strength. In particular, the initial blank is heated to a temperature above its transition temperature Ac3, which is defined as the temperature at which transformation of ferrite into austenite is completed upon heating. By way of a specific and non-limiting example, the initial blank is heated to approximately 950°C. The heated initial blank is inserted into a cooled press having a pair of die halves, which is used for both hot forming and hardening the shaped product. The press is subsequently closed, thereby deforming the initial blank such that it conforms to contours that are defined along facing surfaces of the die halves. Deformation and concomitant rapid cooling of the initial blank within the die halves produces the desired shaped product, in which the austenite structure has been transformed into martensite structure. The tensile strength and hardness of the shaped product is substantially uniform throughout. Optionally, the die halves are not cooled provided that a suitably rapid cooling rate of the shaped product can be achieved.

Subsequently, in a second thermal treatment, a first region of the shaped product is heated in a selective fashion to a known temperature that is lower than the transition temperature Ac3. In particular, the first region of the shaped product is heated to a temperature between approximately 370°C and 800°C. Optionally, the first region of the shaped product is heated to a temperature within the range of temperatures between about 500°C and 750°C. According to an embodiment, the shaped product is at least partially immersed into a fluidized bed that is maintained within a known range of operating temperatures. For instance, the fluidized bed comprises a solid particulate such as sand, which is heated by a flow of hot air passing through therethrough. Of course, the temperature of the flow of hot air is selected to attain the known range of operating temperatures of the fluidized bed. The first region is then cooled in such a way that the first region attains a second tensile strength that is substantially less than the first tensile strength. The second thermal treatment at a temperature between approximately 370°C and 800°C results in a tempered martensite composition within the first region. Optionally, a particulate other than sand is used and/or a fluid other than hot air is used to form the fluidized bed.

The first region of the shaped product may be gas cooled. Optionally, the first region of the shaped product is cooled using another suitable cooling technique, such as for instance one of gas-blasting, fluidized bed cooling, die cooling, water/mist cooling, and cooling with the use of cooling fans/jets. In particular, in accordance with the present invention a collar is provided about the second region of the shaped product, wherein the collar is for protecting said second region of the said product from being heated and wherein the collar of one of gas-cools and liquid-cools the second region of the shaped product.

The shaped product may be partially immersed into the fluidized bed. In particular, a portion of the shaped product corresponding to the first region is immersed into the fluidized bed and is heated to the known temperature. Other portions of the shaped product, which are not immersed into the fluidized bed, are cooled or insulated from being heated to the known temperature as a result of being placed in close proximity to the fluidized bed. The shaped product is gripped using a cooled collar that surrounds a second region of the shaped product adjacent to the first region. Optionally, the cooled collar is immersed at least partially into the fluidized bed. Optionally, the second region of the shaped product is protected from being heated by using a curtain of a cooled gas such as for instance air, or by spraying or misting with a suitable cooling liquid.

The shaped product may be immersed fully into the fluidized bed. A collar surrounds a second region of the shaped product that is adjacent to the first region. The collar may provide cooling functionality (e.g., a gas-cooled collar (such as air-cooled) or a liquid-cooled collar (such as water-cooled)) or the collar may be insulating, such that the second region of the shaped product is protected from being heated to the known temperature. Optionally, the collar both cools and insulates the second region of the shaped product. Optionally, a plurality of collars is used to protect a plurality of non-contiguous second regions from being heated to the known temperature. Optionally, a single collar surrounds and protects a plurality of second regions from being heated to the known temperature, whilst allowing at least one first region of the shaped product to be heated to the known temperature.

Optionally, intermediate processing such as for instance forming and/or cutting and/or perforating, etc. is performed subsequent to the hot stamping and press hardening steps but prior to the post hot forming processing in the fluidized bed. Optionally, forming and/or cutting and or perforating, etc. is performed subsequent to the post hot forming processing in the fluidized bed.

The hot forming and press hardening steps may be omitted. The product may be a roll formed from a coil of Ultra High Strength Steel and subjected subsequently to post-forming thermal treatment in a fluidized bed as described supra. In particular, products may be formed having a geometry that is not sufficiently complex so as to require the use of hot forming and press hardening techniques.

Optionally, the initial blank is formed from a coated material or an uncoated material.

There is provided a method for forming a shaped product from initial blank comprising: subjecting the initial blank to a hot forming and press hardening operation to form the shaped product with substantially a uniform first tensile strength; and subsequently, at least partially immersing the shaped product into a fluidized bed that is maintained within a known range of operating temperatures so as to selectively heat a first region of the shaped product to above a known temperature, while simultaneously maintaining below the known temperature a second region of the shaped product that is adjacent to the first region, and then cooling the first region such that the first region attains a second tensile strength that is substantially less than the first tensile strength.

There is provided a method for forming a shaped product from initial blank comprising: heating the initial blank to an austenitizing temperature; hot-shaping the initial blank in a cooled pair of dies to form the shaped product; cooling the shaped product during a first period of time, using a rate of cooling that is sufficiently rapid to support formation of a martensitic structure within substantially the entire shaped product; at least partially immersing the shaped product into a fluidized bed that is maintained within a known range of operating temperatures, so as to selectively heat a first portion of the shaped product to a known temperature that is less than the austenitizing temperature, while simultaneously maintaining below the known temperature a second portion of the shaped product that is adjacent to the first portion; and, cooling the shaped product such that tempered martensite is formed within the first portion of the shaped product while at the same time the second portion of the shaped product remains substantially free of tempered martensite.

There is provided a method for forming a shaped product from initial blank comprising: providing the initial blank; heating the initial blank to the austenite state; hot-shaping the initial blank in a cooled pair of dies to form the shaped product; hardening the entire shaped product while it is still inside the pair of dies by cooling the product using a rate of cooling that is sufficiently fast to form a martensitic structure; transferring the shaped and hardened product from the pair of dies to a fluidized bed that is maintained within a known range of operating temperatures; at least partially immersing the shaped and hardened product into the fluidized bed, so as to heat a first portion of the product to at least a predetermined first temperature, while at the same time maintaining a second portion of the product below a predetermined second temperature that is lower than the first temperature; removing the product from the fluidized bed; and, cooling the shaped product such that tempered martensite is formed within the first portion of the shaped product while at the same time the second portion of the shaped product remains substantially free of tempered martensite, wherein subsequent to cooling a tensile strength of the first portion of the shaped product is less than a tensile strength of the second portion of the shaped product.

There may be provided a method of making a B column for an automobile, comprising: providing a B column blank; heating the B column blank to the austenite state; hot-shaping the B column blank in a cooled pair of dies to form the B column; hardening the B column while it is still inside the pair of dies, by cooling the B column during a first period of time using a rate of cooling that is sufficiently rapid to support formation of a martensitic structure within substantially the entire B column; at least partially immersing the B column into a fluidized bed that is maintained within a known range of operating temperatures, so as to selectively heat a first portion of the B column above a known temperature that is less than the austenitizing temperature, while simultaneously maintaining below the known temperature a second portion of the B column that is adjacent to the first portion; and, cooling the B column such that tempered martensite is formed within the first portion of the B column while at the same time the second portion of the B column remains substantially free of tempered martensite, wherein subsequent to cooling, a tensile strength of the first portion of the B column is less than a tensile strength of the second portion of the B column.

There is provided a method for forming a shaped product from initial blank comprising: providing an initial blank fabricated from an Ultra High Strength Steel; forming the shaped product from the initial blank; and, at least partially immersing the shaped product into a fluidized bed that is maintained within a known range of operating temperatures so as to selectively heat a first region of the shaped product to above a known temperature, while simultaneously maintaining below the known temperature a second region of the shaped product that is adjacent to the first region, and then cooling the first region such that the first region attains a second tensile strength that is substantially less than the first tensile strength.

### BRIEF DESCRIPTION OF THE DRAWINGS

Exemplary embodiments of the invention will now be described in conjunction with the following drawings, in which:
FIG. 1 is a schematic diagram of a thermo forming line for a steel component, according to an arrangement; In particular, the arrangement shown in figure 1 is an embodiment of the present invention.
FIG. 2 shows a B column of substantially uniform tensile strength, as formed by a conventional hot forming process;
FIG. 3 shows a collar box attached to the B column of FIG. 2;
FIG. 4 shows a B column having substantially two regions of different tensile strength after post hot-forming processing in a fluidized bed;
FIG. 5a shows locations of tensile strength samples taken from a representative B column formed using a method according to an arrangement;
FIG. 5b is a plot showing tensile strength values (MPa) and elongation (%) values for the locations that are indicated in FIG. 5a;
FIG. 5c is a plot showing Vickers Hardness values as a function of distance within the transition zone between the first region and the second region;
FIG. 6 is a simplified flow diagram of a method according to an arrangement;
FIG. 7 is a simplified flow diagram of another method according to an arrangement;
FIG. 8 is a simplified flow diagram of yet another method according to an arrangement; and,
FIG. 9 is a simplified flow diagram of still yet another method according to an arrangement.

### DETAILED DESCRIPTION OF EMBODIMENTS OF THE INVENTION

The following description is presented to enable a person skilled in the art to make and use the invention, and is provided in the context of a particular application and its requirements. In the following there may be described some arrangements which are helpful for understanding the present invention. However, the scope of protection is defined by the claims. Thus, the present invention is not intended to be limited to the embodiments disclosed, but is to be accorded the widest scope consistent with the principles and features disclosed herein.

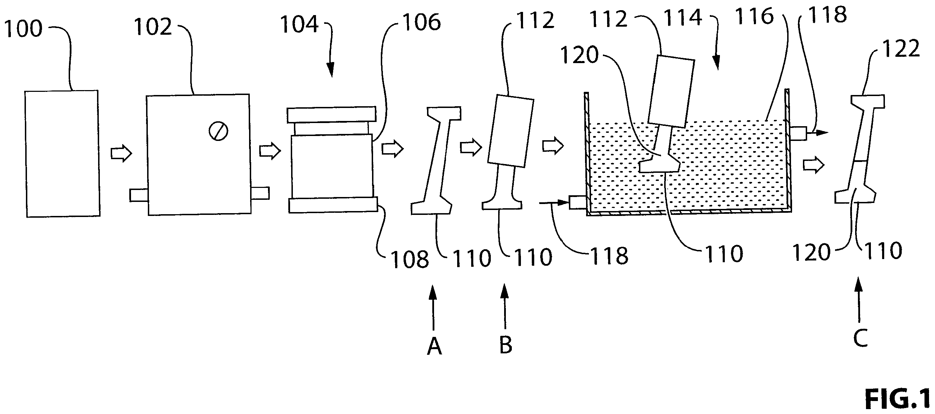

Referring to FIG. 1, shown is a schematic illustration of a thermo forming line for a steel component, according to an embodiment of the instant invention. By way of a specific and non-limiting example, the component that is produced in FIG. 1 is a B column for an automobile. Of course, other types of components may be produced in a similar fashion.

An initial blank 100 is provided. For instance, the initial blank 100 is stamped from a sheet of hardenable steel, such as Usibor® 1500P, Usibor® 1500, another suitable boron steel or any suitable hot stamp press hardened material. Optionally, the initial blank 100 is pre-shaped specifically for producing a B column, such as for instance by an additional cutting step or an additional cold forming step (not shown in FIG. 1). The entire initial blank 100 is then heated in an oven 102 to a temperature above the Ac3 temperature. By way of a specific and non-limiting example, the oven 102 is a roller-hearth or a batch style oven. Once the initial blank 100 is in the austenite state it is transferred rapidly to a die set shown generally at 104, the die set 104 having an upper die half 106 and a lower die half 108. The die set 104 optionally is cooled in order to ensure that a sufficiently rapid cooling rate of the initial blank 100 is achieved, such that martensite is formed. By way of a specific and non-limiting example, channels are defined through the upper die half 106 and the lower die half 108 for flowing a cooling fluid, such as for instance water, through the die halves to achieve the rapid cooling rate of the product that is being formed from the initial blank 100. For instance, a typical cooling rate is in the range of about 30 °C/second to about 100 °C/second. The product is held inside the die set during cooling, so as to maintain the desired shape of the product while it is being cooled and hardened. After being removed from the die set 104, the product (shown at 110) is further cooled to about room temperature, or at least to a temperature between about 20°C and about 250°C. At this stage, the product 110 has substantially a uniform martensite structure.

After the product 110 has cooled to the desired temperature, a collar box 112 is placed around a portion of the product 110 that is to have high tensile strength in the finished product (i.e., the "hard zone"). The collar box 112 may be one of gas-cooled (e.g., air-cooled) and liquid-cooled (e.g., water-cooled). Optionally, the collar box 112 merely insulates the portion of the product 110 from the fluid bed heated portion.

Referring still to FIG. 1, the product 110 is at least partially immersed in a fluidized bed, shown generally at 114. The fluidized bed 114 comprises a solid particulate 116 (e.g., sand) that is heated by a fluid 118 (e.g., hot compressed air) flowing through the solid particulate 116. By way of a specific and non-limiting example, the fluidized bed 114 is set to a desired temperature between about 370°C and about 800°C, in particular a desired temperature in the range of between about 500°C and about 750°C may. Only a first region 120 of the product 110 is immersed in the fluidized bed and heated to approximately the desired temperature. Further, the collar box 112 acts as a barrier and prevents substantial heating of a portion of the product 110 that is adjacent to the first region 120. In the example that is shown in FIG. 1, the product 110 and the collar box 112 are lowered into the fluidized bed 114 to a point up to the collar box 112. Optionally, a small gap is left between the collar box 112 and the fluidized bed 114, or the collar box 112 is lowered slightly into the fluidized bed 114. Optionally, in at least one embodiment, the collar box 112 is omitted and the portion of the product 110 that is to have high tensile strength in the finished product is protected from being heated using a curtain of cooled gas (such as for instance cooled air) or by spraying or misting with a cooling liquid (such as for instance water).

The product 110 and the collar box 112 are left immersed in the fluidized bed 114 until the first region 120 reaches a desired temperature in the range of between about 370°C to about 800°C and may or may not be soaked at that temperature for a period of time. The product 110 and the collar box 112 are then removed from the fluidized bed 114, and the product 110 is cooled to room temperature. According to one embodiment of the instant invention, the first region 120 is gas-cooled. Optionally, a fixture is used to maintain the dimensions of the product 110 during the cooling process. Further optionally, the first region 120 is cooled using another suitable cooling technique, such as for instance one of gas-blasting, fluidized bed cooling, die cooling, water/mist cooling, and cooling with the use of cooling fans/jets, etc. Optionally, additional not illustrated post processing is performed subsequent to cooling, such as for instance trimming or perforating, etc. Optionally, the additional not illustrated post processing is performed subsequent to the hot forming and press hardening steps, but prior to the post hot forming treatment in the fluidized bed.

The martensite within the first region 120 of the product 110 is tempered by performing the steps of reheating to between about 370°C and about 800°C and then cooling. On the other hand, the collar box 112 protects a second region 122 of the product 110 from being reheated to between about 370°C and about 800°C, such that the martensite within the second region 122 is other than tempered. Instead, the original martensite structure that is formed during the hot forming and press hardening operation is retained within the second region 122 in the finished product. Of course, a transition zone (not illustrated) of finite width exists along the "boundary" between the first region 120 and the second region 122. The tensile strength of the product 110 within the transition zone is intermediate the tensile strength within the first region 120 and the tensile strength within the second region 122.

Optionally, additional cycles of heating the product 110 in the fluidized bed followed by cooling the product 110 are performed, in order to form additional "soft regions." Alternatively, the collar box 112 is designed to leave two or more non-contiguous regions of the product 110 unprotected from being heated, such that when the product is reheated by immersion in the fluidized bed 114 and is subsequently cooled, two or more "soft regions" are formed in a single pass. Of course, a plurality of products 110 and/or products of other types may be immersed in the fluidized bed simultaneously, so as to batch-process a plurality of products 110 and/or products of other types in a single pass.

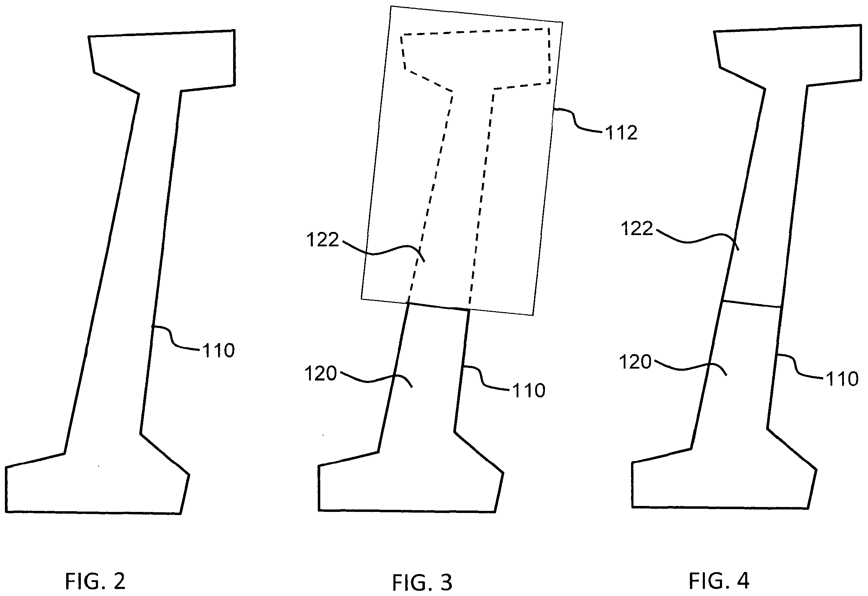

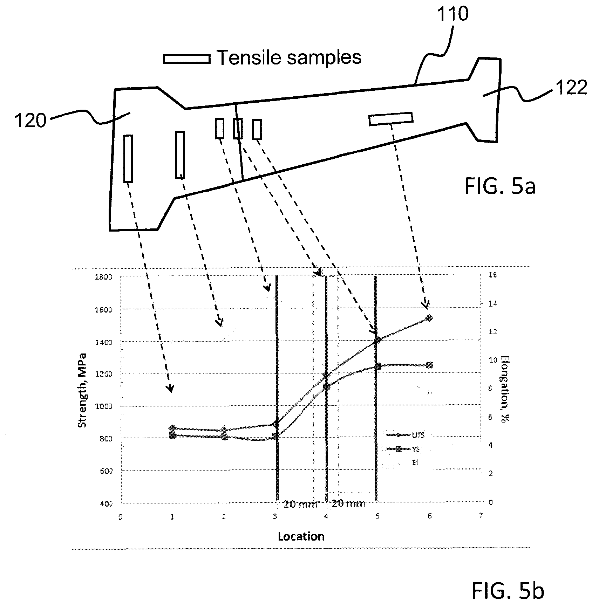

Referring now to FIG. 2, shown is the product 110 that is obtained at point "A" of the thermoforming line of FIG. 1. The product 110 at point "A" is substantially uniformly of martensite structure. Referring now to FIG. 3, shown is the product 110 corresponding to point "B" of the thermoforming line of FIG. 1. The structure of the product 110 at point "B" is also substantially uniformly of martensite structure, but the product 110 has been mounted in collar box 112 so as to define an unprotected first region 120 and a protected second region 122. FIG. 4 illustrates that two regions of substantially different tensile strength are obtained at point "C" of the thermoforming line of FIG. 1, following post hot-forming processing of the product 110. More particularly, subsequent to being reheated in the fluidized bed 114 and then cooled to room temperature, the protected second region 122 retains the original martensite structure, whereas the martensite within the first region 120 is tempered. As discussed *supra* a transition zone (not illustrated) of finite width exists along the "boundary" between the first region 120 and the second region 122. As is discussed in greater detail with reference to FIGS. 5a and 5b, the tensile strength of the product 110 within the transition zone is intermediate the tensile strength within the first region 120 and the tensile strength within the second region 122.

Referring now to FIG. 5a, shown are the locations of a plurality of tensile strength samples taken from a representative B column that was formed using the thermoforming line of FIG. 1. A sample is taken from the transition zone along the "boundary" between the first region 120 and the second region 122, one sample is taken on each side of the "boundary" and at a distance of 20 mm from the line, and additional samples are taken proximate each end of the B column, within the first and second regions 120 and 122, respectively. As is shown graphically in FIG. 5b, tensile strength values of the samples that are taken from the first region 120 are approximately uniform and lower than the tensile strength values of the samples that are taken the second region 122. The sample that is taken from the transition zone between the first and second regions 120 and 122, respectively, has a tensile strength value that is intermediate the high and low tensile strength values. Accordingly, the product 110 is characterized by a first region 120 of low tensile strength and a second region 122 of high tensile strength, separated by a relatively transition zone of intermediate tensile strength.

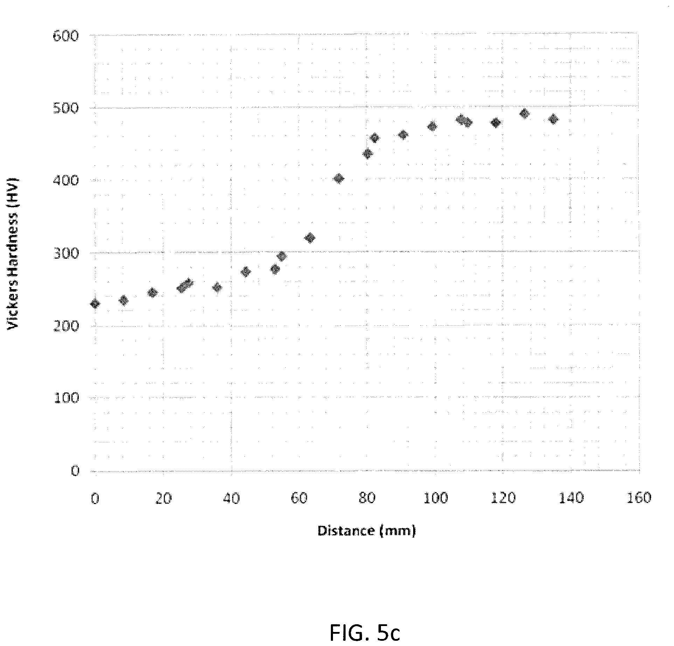

FIG. 5c is a plot showing experimentally measured Vickers Hardness values as a function of distance proximate the transition zone between the first region and the second region of the B column of FIG. 5a. As is shown in FIG. 5c, the hardness is substantially uniform within the first region between about 0 mm and about 60 mm, and within the second region between about 80 mm and about 140 mm. Within the transition zone between about 60 mm and 80 mm, the hardness changes rapidly with distance, indicating a narrow and well defined transition zone between the first region and the second region.

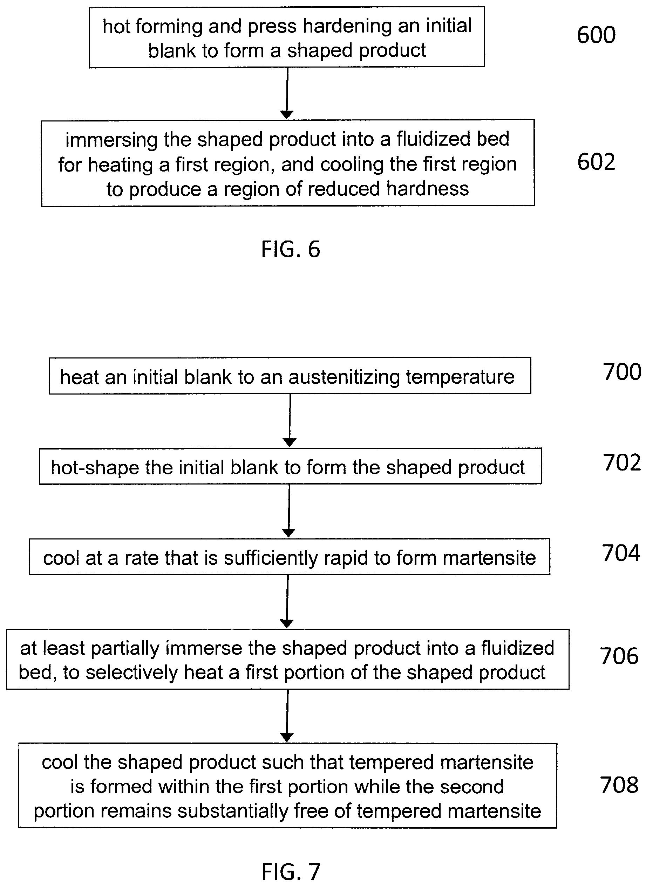

Referring now to FIG. 6, shown is a simplified flow diagram of a method according to an arrangement. At 600 an initial blank is subjected to a hot forming and press hardening operation to form a shaped product with substantially a uniform first tensile strength. At 602 the shaped product subsequently is immersed, at least partially, into a fluidized bed that is maintained within a known range of operating temperatures. While the shaped product is at least partially immersed into the fluidized bed, a first region of the shaped product is heated selectively to above a known temperature, while at the same time a second region of the shaped product that is adjacent to the first region is maintained below the known temperature. The first region is then cooled, such that the first region attains a second tensile strength that is substantially less than the first tensile strength.

Referring now to FIG. 7, shown is a simplified flow diagram of a method according to an arrangement. At 700 the initial blank is heated to an austenitizing temperature. At 702 the initial blank is hot-shaped in a cooled pair of dies to form the shaped product. At 704 the shaped product is cooled during a first period of time, using a rate of cooling that is sufficiently rapid to support formation of a martensitic structure within substantially the entire shaped product. At 706 the shaped product is at least partially immersed into a fluidized bed that is maintained within a known range of operating temperatures. While the shaped product is at least partially immersed into the fluidized bed, a first portion of the shaped product is heated selectively to a known temperature that is less than the austenitizing temperature. During this time a second portion of the shaped product, which is adjacent to the first portion, is maintained below the known temperature. At 708 the shaped product is cooled such that martensite within the first portion of the shaped product is tempered while at the same time martensite within the second portion of the shaped product is other than tempered.

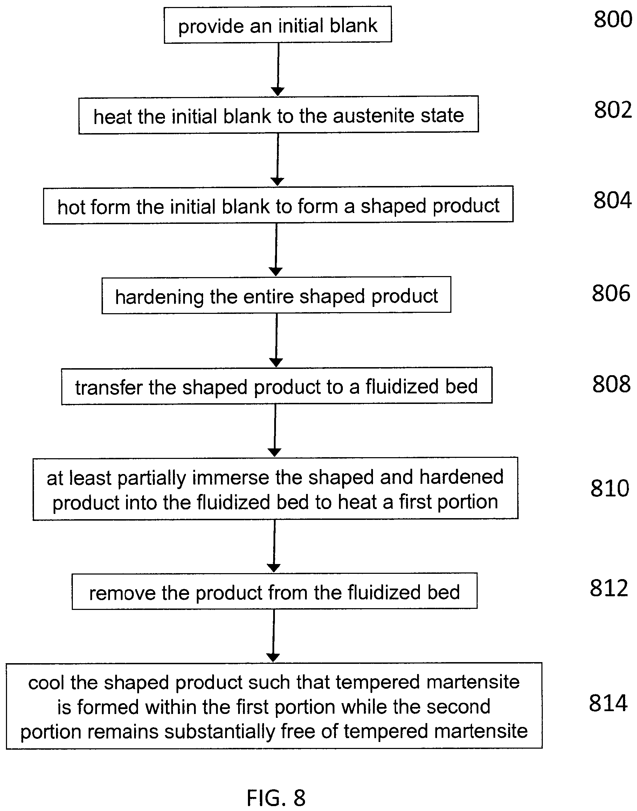

Referring now to FIG. 8, shown is a simplified flow diagram of a method according to an arrangement. The initial blank is provided at 800. At 802 the initial blank is heated to the austenite state. At 804 the initial blank is hot-shaped in a cooled pair of dies so as to form the shaped product. At 806 the entire shaped product is hardened, while it is still inside the pair of dies, by cooling the product using a rate of cooling that is sufficiently fast to form a martensitic structure. At 808 the shaped and hardened product is transferred from the pair of dies to a fluidized bed that is maintained within a known range of operating temperatures. At 810 the shaped and hardened product is at least partially immersed into the fluidized bed, so as to heat a first portion of the product to at least a predetermined first temperature, while at the same time maintaining a second portion of the product below a predetermined second temperature that is lower than the first temperature. At 812 the product is removed from the fluidized bed. At 814 the shaped product is cooled such that martensite within the first portion of the shaped product is tempered while at the same time martensite within the second portion of the shaped product is other than tempered. In a product that is formed according to the method that is described with reference to FIG. 8, a tensile strength of the first portion of the shaped product is less than a tensile strength of the second portion of the shaped product.

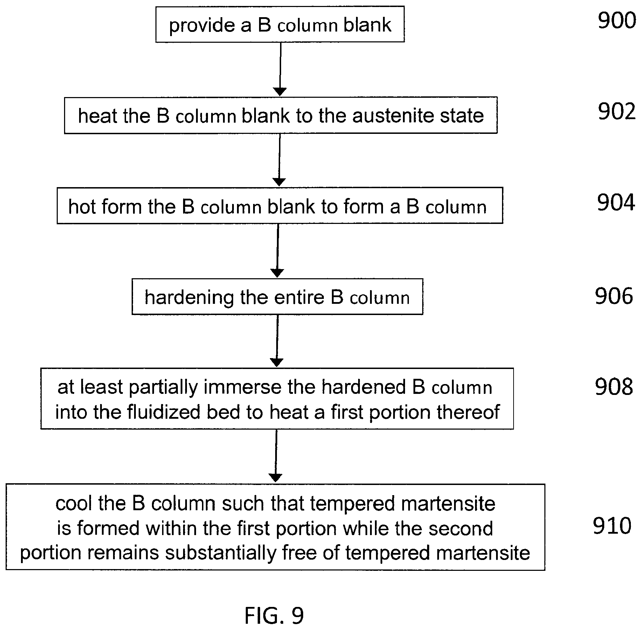

Referring now to FIG. 9, shown is a simplified flow diagram of a method according to an arrangement. At 900 a B column blank is provided. At 902 the B column blank is heated to the austenite state. At 904 the B column blank is hot-shaped in a cooled pair of dies, thereby forming the B column profile. At 906 the B column is hardened while it is still inside the pair of dies, by cooling the B column during a first period of time using a rate of cooling that is sufficiently rapid to support formation of a martensitic structure within substantially the entire B column. At 908 the B column is at least partially immersed into a fluidized bed that is maintained within a known range of operating temperatures, so as to selectively heat a first portion of the B column above a known temperature that is less than the austenitizing temperature, while simultaneously maintaining below the known temperature a second portion of the B column that is adjacent to the first portion. At 910 the B column is cooled such that martensite within the first portion of the B column is tempered while at the same time martensite within the second portion of the B column is other than tempered. In a B column that is formed according to the method that is described with reference to FIG. 9, a tensile strength of the first portion of the B column is less than a tensile strength of the second portion of the B column.

Numerous other embodiments may be envisaged without departing from the scope of the instant invention.

## Claims

1. A method of forming a shaped product (110) from an initial blank, comprising:
subjecting the initial blank to a hot forming and press hardening operation to form the shaped product (110) with a uniform first tensile strength; and
subsequently, partially immersing the shaped product (110) into a fluidized bed (114) that is maintained within a known range of operating temperatures so as to selectively heat a first region (120) of the shaped product (110) to above a known temperature, while simultaneously maintaining below the known temperature a second region (122) of the shaped product (110) that is adjacent to the first region (120);
then cooling the first region (120) such that the first region (120) attains a second tensile strength that is less than the first tensile strength,
wherein the first region (120) is immersed into the fluidized bed (114), while the second region (122) of the shaped product (110) is not immersed into the fluidized bed (114), and wherein the second region (122) is adjacent to the first region (120),
wherein the known temperature is between 370°C and 800°C;
and the method further comprising protecting the second region (122) from being heated to the known temperature, wherein the protecting comprises directing a flow of a cooling fluid toward the second region (122),
wherein a collar (112) is provided about the second region (122) of the shaped product (110), the collar (112) for protecting the second region (122) of the shaped product (110) from being heated, and wherein the collar (112) one of gas-cools and liquid-cools the second region (122) of the shaped product (110).

2. A method according to claim 1, wherein the initial blank is heated to an austenitization temperature during the hot forming and press hardening operation, and wherein the known temperature is lower than the austenitization temperature.

3. The method of claim 2, wherein
hot forming comprises hot-shaping the initial blank in a cooled pair of dies (106, 108) to form the shaped product (110); and wherein the method further comprises:
cooling the shaped product (110) during a first period of time, using a rate of cooling that is sufficiently rapid to support formation of a martensitic structure within the entire shaped product (110).

4. The method of claim 3, wherein the method further comprises:
cooling the shaped product (110) such that martensite within the first portion (120) of the shaped product (110) is tempered while at the same time martensite within the second portion (122) of the shaped product (110) is other than tempered.

5. The method of claim 4, further comprising:
hardening the entire shaped product (110) while it is still inside the pair of dies (106, 108) by cooling the product (110) using a rate of cooling that is sufficiently fast to form a martensitic structure; and
wherein subsequent to cooling, a tensile strength of the first portion (120) of the shaped product (110) is less than a tensile strength of the second portion (122) of the shaped product (110).

6. The method of claim 5, wherein the method further comprises providing a B column for an automobile as the shaped product (110).

7. A method according to claim 1, wherein a central portion of the collared second region is prevented from heating above a predetermined temperature, the predetermined temperature is lower than the known temperature.

8. The method according to any one of claims 1 to 7, comprising at least partially immersing the shaped product (110) into the fluidized bed (114) a second time, so as to selectively heat a third region of the shaped product (110) to above the known temperature, and then cooling the third region such that the third region attains a third tensile strength that is less than the first tensile strength.

9. The method according to any one of claims 1 or 8, wherein the collar (112) has a predetermined shape and is provided about the shaped product (110) so as to define at least one second region (122) and a plurality of first regions (120), in particular non-contiguous first regions, or wherein the collar comprises a plurality of collars defining a plurality of second regions and a plurality of first regions.

10. A method according to any one of claims 1 to 9, wherein prior to partially immersing the shaped product (110) into the fluidized bed (114), substantially the entire shaped product (110) has a martensite structure.

11. The method according to any one of claims 1 to 9, wherein the known temperature is 500°C and 750°C.

12. A method according to any one of claims 1 to 10, wherein the initial blank is fabricated from a press hardenable steel alloy material.

## Patentansprüche

1. Verfahren zum Formen eines geformten Produkts (110) aus einem anfänglichen Rohling, umfassend:
Unterziehen des anfänglichen Rohlings einem Warmverformungs- und Presshärtungsvorgang, um das geformte Produkt (110) mit einer gleichmäßigen ersten Zugfestigkeit zu formen; und
anschließend teilweises Eintauchen des geformten Produkts (110) in ein Fluidbett (114), das innerhalb eines bekannten Bereichs von Betriebstemperaturen gehalten wird, um einen ersten Bereich (120) des geformten Produkts (110) selektiv oberhalb von einer bekannten Temperatur zu erhitzen, während gleichzeitig ein zweiter Bereich (122) des geformten Produkts (110), der an den ersten Bereich (120) angrenzt, unterhalb der bekannten Temperatur gehalten wird;
dann Abkühlen des ersten Bereichs (120), so dass der erste Bereich (120) eine zweite Zugfestigkeit erreicht, die geringer ist als die erste Zugfestigkeit,
wobei der erste Bereich (120) in das Fluidbett (114) eingetaucht ist, während der zweite Bereich (122) des geformten Produkts (110) nicht in das Fluidbett (114) eingetaucht ist, und wobei der zweite Bereich (122) an den ersten Bereich (120) angrenzt,
wobei die bekannte Temperatur zwischen 370°C und 800°C beträgt;
und wobei das Verfahren ferner das Schützen des zweiten Bereichs (122) davor umfasst, auf die bekannte Temperatur erhitzt zu werden, wobei das Schützen das Richten eines Stroms eines Kühlfluids auf den zweiten Bereich (122) umfasst,
wobei ein Kragen (112) um den zweiten Bereich (122) des geformten Produkts (110) herum vorgesehen ist, wobei der Kragen (112) dazu dient, den zweiten Bereich (122) des geformten Produkts (110) vor Erwärmung zu schützen, und wobei der Kragen (112) den zweiten Bereich (122) des geformten Produkts (110) entweder gaskühlt oder flüssigkeitskühlt.

2. Verfahren nach Anspruch 1, wobei der anfängliche Rohling während des Warmform- und Presshärtevorgangs auf eine Austenitisierungstemperatur erwärmt wird und wobei die bekannte Temperatur niedriger als die Austenitisierungstemperatur ist.

3. Verfahren nach Anspruch 2, wobei Warmverformen umfasst das Warmformen des anfänglichen Rohlings in einem gekühlten Werkzeugpaar (106, 108), um das geformte Produkt (110) zu bilden;
und wobei das Verfahren ferner umfasst:
Kühlen des geformten Produkts (110) während einer ersten Zeitspanne unter Verwendung einer Abkühlgeschwindigkeit, die ausreichend schnell ist, um die Bildung einer martensitischen Struktur innerhalb des gesamten geformten Produkts (110) zu unterstützen.

4. Verfahren nach Anspruch 3, wobei das Verfahren ferner umfasst:
Abkühlen des geformten Produkts (110), so dass Martensit innerhalb des ersten Bereichs (120) des geformten Produkts (110) getempert wird, während gleichzeitig Martensit innerhalb des zweiten Bereichs (122) des geformten Produkts (110) was Anderes als getempert ist.

5. Verfahren nach Anspruch 4, weiter umfassend:
Härten des gesamten geformten Produkts (110), während es sich noch innerhalb des Werkzeugpaars (106, 108) befindet, durch Abkühlen des Produkts (110) unter Verwendung einer Abkühlgeschwindigkeit, die ausreichend schnell ist, um eine martensitische Struktur zu bilden; und
wobei nach dem Abkühlen eine Zugfestigkeit des ersten Bereichs (120) des geformten Produkts (110) geringer ist als eine Zugfestigkeit des zweiten Bereichs (122) des geformten Produkts (110).

6. Verfahren nach Anspruch 5, wobei das Verfahren ferner das Bereitstellen einer B-Säule für ein Automobil als das geformte Produkt (110) umfasst.

7. Verfahren nach Anspruch 1, wobei verhindert wird, dass sich ein zentraler Bereich des kragenförmigen zweiten Bereichs über eine vorbestimmte Temperatur hinaus erwärmt, wobei die vorbestimmte Temperatur niedriger als die bekannte Temperatur ist.

8. Verfahren nach einem der Ansprüche 1 bis 7, bei dem das geformte Produkt (110) mindestens teilweise ein zweites Mal in das Fluidbett (114) eingetaucht wird, um einen dritten Bereich des geformten Produkts (110) selektiv oberhalb der bekannten Temperatur zu erhitzen, und dann der dritte Bereich so abgekühlt wird, dass der dritte Bereich eine dritte Zugfestigkeit erreicht, die geringer ist als die erste Zugfestigkeit.

9. Verfahren nach einem der Ansprüche 1 oder 8, wobei der Kragen (112) eine vorbestimmte Form hat und um das geformte Produkt (110) herum so vorgesehen ist, dass er mindestens einen zweiten Bereich (122) und eine Vielzahl von ersten Bereichen (120), insbesondere nicht angrenzende erste Bereiche, definiert, oder wobei der Kragen eine Vielzahl von Kragen umfasst, die eine Vielzahl von zweiten Bereichen und eine Vielzahl von ersten Bereichen definieren.

10. Verfahren nach einem der Ansprüche 1 bis 9, wobei vor dem teilweisen Eintauchen des geformten Produkts (110) in das Fluidbett (114) im Wesentlichen das gesamte geformte Produkt (110) eine Martensitstruktur aufweist.

11. Verfahren nach einem der Ansprüche 1 bis 9, wobei die bekannte Temperatur 500°C und 750°C beträgt.

12. Verfahren nach einem der Ansprüche 1 bis 10, wobei der anfängliche Rohling aus einem presshärtbaren Stahllegierungsmaterial hergestellt ist.

## Revendications

1. Procédé de formation d'un produit façonné (110) à partir d'une ébauche initiale, comprenant :
la soumission de l'ébauche initiale à une opération de formage à chaud et de durcissement à la presse pour former le produit façonné (110) avec une première résistance à la traction uniforme ; et
ensuite, l'immersion partielle du produit façonné (110) dans un lit fluidisé (114) qui est maintenu dans une plage connue de températures de fonctionnement de manière à chauffer sélectivement une première région (120) du produit façonné (110) au-dessus d'une température connue, tout en maintenant simultanément en dessous de la température connue une deuxième région (122) du produit façonné (110) qui est adjacente à la première région (120) ;
puis en refroidissant la première région (120) de sorte que la première région (120) atteigne une deuxième résistance à la traction qui est inférieure à la première résistance à la traction,
la première région (120) étant immergée dans le lit fluidisé (114), tandis que la deuxième région (122) du produit façonné (110) n'est pas immergée dans le lit fluidisé (114), et la deuxième région (122) étant adjacente à la première région (120),
la température connue se situant entre 370 °C et 800 °C ;
et le procédé comprenant en outre la protection de la deuxième région (122) contre le chauffage à la température connue, la protection comprenant le routage d'un flux de fluide de refroidissement vers la deuxième région (122),
un collier (112) étant fourni autour de la deuxième région (122) du produit façonné (110), le collier (112) servant à protéger la deuxième région (122) du produit façonné (110) contre un échauffement, et le collier (112) refroidissant, au moyen d'un gaz ou d'un liquide, la deuxième région (122) du produit façonné (110).

2. Procédé selon la revendication 1, dans lequel l'ébauche initiale est chauffée à une température d'austénitisation pendant l'opération de formage à chaud et de durcissement à la presse, et dans lequel la température connue est inférieure à la température d'austénitisation.

3. Procédé selon la revendication 2, dans lequel
le formage à chaud comprend le façonnage à chaud de l'ébauche initiale dans une paire de matrices refroidies (106, 108) pour former le produit façonné (110) ; et le procédé comprenant en outre :
le refroidissement du produit façonné (110) pendant un premier laps de temps, en utilisant une vitesse de refroidissement suffisamment rapide pour favoriser la formation d'une structure martensitique au sein du produit façonné (110).

4. Procédé selon la revendication 3, le procédé comprenant en outre :
le refroidissement du produit façonné (110) de telle sorte que la martensite contenue dans la première partie (120) du produit façonné (110) subisse un revenu, tandis qu'en même temps la martensite contenue dans la deuxième partie (122) du produit façonné (110) soit dans un état autre qu'un revenu.

5. Procédé selon la revendication 4, comprenant en outre :
le durcissement de l'ensemble du produit façonné (110) pendant qu'il est encore à l'intérieur de la paire de matrices (106, 108) par refroidissement du produit (110) en employant une vitesse suffisamment rapide pour former une structure martensitique ; et
dans lequel, après refroidissement, une résistance à la traction de la première partie (120) du produit façonné (110) est inférieure à une résistance à la traction de la seconde partie (122) du produit façonné (110).

6. Procédé selon la revendication 5, le procédé comprenant en outre la fourniture d'un pied milieu pour automobile en tant que produit façonné (110).

7. Procédé selon la revendication 1, dans lequel une partie centrale de la deuxième région munie du collie est empêchée de s'échauffer au-dessus d'une température prédéterminée, la température prédéterminée étant inférieure à la température connue.

8. Procédé selon l'une quelconque des revendications 1 à 7, comprenant l'immersion au moins partielle du produit façonné (110) dans le lit fluidisé (114) une deuxième fois, de manière à chauffer sélectivement une troisième région du produit façonné (110) au-dessus de la température connue, puis le refroidissement de la troisième région de telle sorte que la troisième région atteigne une troisième résistance à la traction qui est inférieure à la première résistance à la traction.

9. Procédé selon l'une quelconque des revendications 1 ou 8, dans lequel le collier (112) a une forme prédéterminée et est fourni autour du produit façonné (110) de manière à définir au moins une deuxième région (122) et une pluralité de premières régions (120), en particulier des premières régions non contiguës, ou dans lequel le collier comprend une pluralité de colliers définissant une pluralité de deuxièmes régions et une pluralité de premières régions.

10. Procédé selon l'une quelconque des revendications 1 à 9, dans lequel, avant d'immerger partiellement le produit façonné (110) dans le lit fluidisé (114), la quasi-totalité du produit façonné (110) a une structure martensitique.

11. Procédé selon l'une quelconque des revendications 1 à 9, dans lequel la température connue est de 500 °C et 750 °C.

12. Procédé selon l'une quelconque des revendications 1 à 10, dans lequel l'ébauche initiale est fabriquée à partir d'un matériau d'alliage d'acier durcissable à la presse.
